Europäisches Patentamt

European Patent Office

Office européen des brevets

(19)

(11) **EP 1 298 505 A1**

(12) **EUROPEAN PATENT APPLICATION**

(43) Date of publication:
02.04.2003 Bulletin 2003/14

(51) Int Cl.⁷: **G05B 17/02**, G06N 3/04

(21) Application number: **01308261.5**

(22) Date of filing: **27.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **The designation of the inventor has not yet been filed** |
| (71) Applicant: **BRITISH TELECOMMUNICATIONS public limited company**<br>**London EC1A 7AJ (GB)** | (74) Representative: **Lloyd, Barry George William et al**<br>**BT Group Legal Services,**<br>**Intellectual Property Department,**<br>**8th Floor, Holborn Centre,**<br>**120 Holborn**<br>**London EC1N 2TE (GB)** |

(54) **A modelling method**

(57)     Embodiments of the present invention are concerned with methods of building models from data.

In general, at least some model parameters have to be modified during the building process, and this can be an iterative process that is difficult to control efficiently using crisp rules. Known methods either involve manual modification to the parameters, which is at best an inexact science, and at worse results in solutions uncontrollably oscillating between solutions, or involves application of crisp rules that attempt to capture, and react to, certain trends in solutions. Other known methods focus only on single parameters, which is not sufficient to properly control a model building process.

Embodiments of the invention provide a method of creating a model from data, where the model comprises one or more model parameters, and the building of the model is controlled by a plurality of fuzzy sets. The method comprises the steps of:

(i) receiving data for use in creating the model;
(ii) inputting the data to a learning process associated with the model;
(iii) invoking the learning process;
(iv) accessing a control rule, the control rule comprising at least one fuzzy set relating to one or more model parameters;
(v) monitoring at least one of the model parameters;
(vi) comparing the or each monitored model parameter with the control rule to identify whether the rule should be applied, and if so, evaluating the rule; and
(vii) modifying the learning process in accordance with the evaluated rule.

Fig 4

**Description**

The present invention relates to a method of building a model, and is particularly, but not exclusively, suited to building a model using one or more data analysis methods.

In many situations, information is derived from previously observed data. Thus decisions and recommendations, which are dependent on that information, are dependent on the ways in which data is analysed. For example, in forecasting the weather, predicting the behaviour of stock markets, identifying prospective customers, recognising objects and patterns in images, etc, previously observed data is analysed and used to form the basis of predictions and classifications.

Data analysis always has some objective, which is typically framed in the form of one or more questions to be answered. Examples of such questions include: Are there relevant structures in the data? Are there anomalous records? How can the data conveniently be summarised? Are these two groups different? Can the value of this attribute be predicted from measured values?

Recent advances in computer technology not only allow us to gather and store a continually increasing volume of data, but also enable us to apply an increasingly diverse range of analysis techniques in an attempt to understand the data. Such a diverse range of analysis techniques is a mixed blessing: in general, for a given set of data, several methods could be applied, each with subtle differences, preconditions or assumptions. Moreover, these methods often have rather complex interrelationships, which must be understood in order to exploit the methods in an intelligent manner.

Essentially, therefore, data analysis cannot be viewed as a collection of independent tools, and some *a priori* knowledge of the methods is required.

A further problem with data analysis is that questions relating to the data are usually not formulated precisely enough to enable identification of a single data analysis method, or a particular combination of data analysis methods. Very often new questions arise during the analysis process, as a result of the analysis process itself, and these typically require iterative application of other methods.

Typically whoever (or, if the data analysis is performed automatically, whatever) analyses the data is not an expert in analysis methods per se: he understands the application area, or domain, in which the data has been collected, but is not intimate with the workings of the analysis methods themselves. Geologists or physicians, for example, are not interested in the mathematical foundations of the analysis methods they apply to their data, but in the answers to questions such as, where to drill for oil, or which treatment is best for a certain disease. This is quite a common situation - there is no expectation of, for example, a driver to be capable of repairing his car or of a computer user to understand the function of a central processing unit (CPU). The point is that data analysis is a practical area and data analysis methods nowadays - with the help of the computer - are used as tools.

According to a first aspect of the present invention there is provided a method of creating a model from data, the model comprising one or more model parameters, the method comprising the steps of:

> receiving data for use in creating the model;
> inputting the data to a learning process associated with the model;
> invoking the learning process, thereby modifying at least one of the model parameters;
> accessing a control rule, the control rule comprising at least one fuzzy set relating to one or more model parameters;
> monitoring at least one of the model parameters;
> comparing the or each monitored model parameter with the control rule to identify whether the rule should be applied, and if so, evaluating the rule; and
> modifying the learning process in accordance with the evaluated rule.

A learning process can be, for example, a data analysis method that is used to create a model from data. An example of such data analysis methods includes a neural network, which is a data analysis method while it is learning.

A control rule can be a rule that controls aspects of the learning process in dependence on the behaviour of the model parameters during the learning process. An example of a control rule, for the example of a neural network, is **"If** the error oscillates *strongly,* **then** reduce the learning rate *strongly".* In this example, the model parameter is "error oscillation" and the fuzzy set relating thereto is *strongly.* If the rule should be applied, the neural network can then be modified in accordance with the consequent part of the rule: "reduce the learning rate *strongly".*

Preferably the modification includes modifying one or more of the model parameters and restarting the learning process, or selecting a new learning process. Should the model parameters be modified, they are modified in accordance with the consequent part of the control rule.

Conveniently the method further includes the steps of monitoring the effect of the modification on the learning process; comparing the monitored effect with a predetermined criterion; and if the monitored effect does not satisfy the predetermined criterion, modifying the corresponding control rule.

This aspect of the invention thus enables the performance of the control rule itself to be assessed based on some predetermined criterion. Thus, for example, if the rule presented above, **"If** the error oscillates *strongly,* **then** reduce the learning rate *strongly"* is applied, and the learning rate is reduced correspondingly, the effect of this reduction is monitored. If, after repeated applications of this control rule the error is still oscillating *strongly,* it can be concluded that the rule itself needs modifying. Preferably it is the fuzzy set corresponding to *strongly* that is modified, as this controls the degree of reduction applied to the learning rate.

In at least some embodiments the step of modifying a control rule comprises the steps of quantifying the effect of the modification on the learning process as an error value; and using the error value to modify at least one fuzzy set involved in the control rule such that the monitored modification of the learning process is observed to satisfy the predetermined criterion. Preferably the modification of the fuzzy set is performed by a neuro-fuzzy algorithm, using the error value to control the degree of modification applied to the fuzzy set.

The terms data analysis, model, predictive model, classification model, clustering model, soft computing, fuzzy system, neuro-fuzzy system, and variable, are used in the description. These are defined as follows:

"data analysis": A data analysis method creates a model from data. That model can then be used for prediction, clustering or description; e.g. a neural network is a data analysis method (while it is learning) and a model (when it has finished learning and is applied to new data). Thus data analysis is modelling, i.e. the process of creating a model.

"model": the term model is widely used in data analysis, with different meanings. For the purposes of this description, a model is a postulated structure, or an approximation to a structure, which could have led to some observed phenomenon or data. For example, in order to explain the observation that objects fall towards the centre of the earth when they are dropped, we construct a model of gravitation.

Empirical models are a type of model that describes relationships without basing them on an underlying theory. That means the model merely captures the correlations between input and output, and usually it gives us some means to estimate the probability that the output (i.e. prediction, classification etc) is correct. Thus in data analysis, empirical models are built, using observed data to determine such correlations.

"predictive model": This is a structure that helps predict the occurrence of a certain phenomenon (output data) given certain circumstances (input data). For example, the weather forecast is based on a predictive model. The model does not necessarily need to be accurate in the sense that it models the true underlying causal relationship. If a predictive model is built from data this is usually a structure that represents the correlations between input and output data. Although correlations can be sufficient to produce good predictions, they do not imply causality. An example of a predictive model is the gravitational model (as part of our physical world model), which can be used to make predictions (e.g. to calculate the exact position of any object in space (output data) based on the position and velocity of the object at some point in time (input data)).

In order to build a predictive model from data, historical data, together with the associated observed phenomenon, is required.

"classification model": A classification model is a structure that enables classification of a certain observation, i.e. it enables an observation to be described by one of several applicable meaningful labels or to be sorted into a certain set of observations. For example: the classification of patient as sick or healthy is based on a classification model (which may exist only in the head of the examining doctor). A classification model can be considered to be a special case of a predictive model, because a classification can be also seen as a prediction. For example, in database marketing there exist classifications such as "this person may be a potential customer". In order to build a classification model from data, previously classified data is required.

"clustering model": A clustering model is a special case of a classification model, and is a structure that groups observations together by similarity. The groups are called clusters. A clustering model can be built from data that is not classified by using an appropriate (postulated) similarity measure.

"soft computing": Soft computing is an approach to simulate human reasoning, which makes use of human tolerance of uncertainty and vagueness to obtain inexpensive solutions that are easy to apply to, or use with, new data, and are easy to use, operate, and maintain in applications. Fuzzy systems, neural networks, evolutionary computation and probabilistic reasoning are considered to be soft computing techniques.

"fuzzy systems": Fuzzy systems are systems that are based on fuzzy rules. A fuzzy rule comprises one or more fuzzy sets, e.g. If x is *small* then y is *approximately zero;* here *small* and *approximately zero* are fuzzy sets. Fuzzy systems can model smooth transitions between states and thus avoid counterintuitive results that can occur when boundaries of crisp states are crossed. Fuzzy systems are also known as neural fuzzy networks and/or fuzzy networks.

"neuro-fuzzy systems": A neuro-fuzzy system refers to combinations of neural networks and fuzzy systems, which in combination create a fuzzy system from data by some kind of (heuristic) learning method based on neural network learning procedures.

"variable": A variable is an item of data in a data set; it is also referred to as an attribute.

Further aspects and advantages of the present invention will be apparent from the following description of preferred embodiments of the invention, which are given by way of example only and with reference to the accompanying drawings, in which

Figure 1 is a schematic diagram showing a conventional client-server configuration arranged to perform data analysis;

Figure 2 is a schematic diagram of components of a data analyser according to a first embodiment of the present invention;

Figure 3 is a schematic diagram illustrating relationship of a wrapper program and an external analysis tool, according to embodiments of the invention;

Figure 4 is a flow diagram showing steps involved in building a model according to embodiments of the invention;

Figure 5 is a flow diagram showing steps involved in capturing user requirements according to at least some embodiments of the invention;

Figure 6 is a flow diagram showing steps involved in identifying data analysis methods that satisfy user requirements, according to some embodiments of the invention;

Figure 7 is a flow diagram showing further aspects of identifying data analysis methods that satisfy user requirements, according to some embodiments of the invention; and

Figure 8 is a schematic block diagram showing an alternative arrangement of the model builder shown in Figure 2.

Overview of operating environment of embodiments of the invention

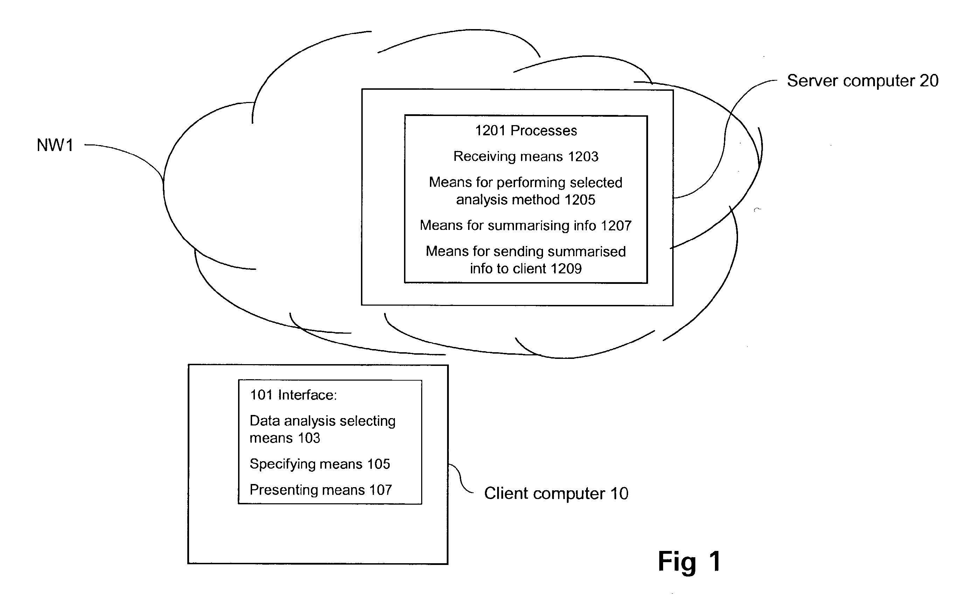

Figure 1 shows a generally conventional arrangement of computer systems 10, 20 configured to perform data analysis according to known analysis methods. The computer systems 10, 20 are arranged in a conventional client-server relationship, wherein a first computer 10 acts as a client to a second computer 20 and communication occurs over a network NW1. In a conventional manner, data to be analysed is input to one or more processes 1 201 running on the server computer 20 via an interface 101 running on the client computer 10.

The interface 101 typically includes means 103 for allowing an analysis method to be selected from a predetermined list of methods, and means 105 for allowing the user to specify data to be analysed. The predetermined list of methods may be retrieved from the server computer 20 via one of the processes 1201. The processes 1201 further include means 1203 for receiving data indicative of the selected analysis method together with the data to be analysed, and means 1205 for performing the selected analysis method. The processes 1201 further include means 1207 for summarising results of analysing the data and means 1209 for sending the summarised results to the client computer. The means 1209 for sending the summarised results may be the same means as used to send the predetermined list of methods.

The interface 101 includes means 107 for presenting the summarised results to the user.

With known systems, when performing analysis on data, users typically have a solution-oriented view: there is a problem, and data has been collected with a view to providing some information about the problem. Usually a method is selected, based on vague knowledge about some feature of the problem, and a model is built, based on a vague understanding of the parameters of the model. This is often suboptimal, because, as stated above, the user can be assumed to be an expert in the application area, but not in data analysis.

Embodiments of the present invention are concerned with providing a means of controlling the process of building models. In general, at least some model parameters have to be modified during the building process, and this can be an iterative process that is difficult to control efficiently using crisp rules. Known methods either involve manual modification to the parameters, which is at best an inexact science, and at worse results in solutions uncontrollably oscillating between solutions, or involves application of crisp rules that attempt to capture, and react to, certain trends in solutions. Other known methods focus only on single parameters, which is not sufficient to properly control a model building process.

Specifically, embodiments of the invention provide a means of modifying model parameters so that solutions converge towards acceptable solutions in a controlled and smooth manner.

The means of modifying parameters in this way is provided by associating parameters of data analysis methods with fuzzy logic expressions. Embodiments include a knowledge base comprising data analysis methods coupled with fuzzy logic expressions for each of a plurality of parameters such as speed, learning rate, accuracy, model complexity etc. An example of a typical fuzzy set is the fuzzy set for the model characteristic *speed: very fast, fast, slow, moderately slow, very slow.* The fuzzy set maps onto an arbitrary scale such as [0,100], and, for each data analysis method, the knowledge base stores one, or a set of, values within this scale that is indicative of its speed (based on a characteristic of the model such as number of hidden units, if the method is a neural network).

At least some embodiments of the invention include means for automatically modifying the fuzzy sets as a function of the errors associated with the model under construction. For example, a rate of learning can be gradually increased in dependence on the rate at which a solution oscillates. In general, embodiments of the invention control all relevant model creation parameters simultaneously. The relations between the parameters are controlled by rules accessible from a fuzzy knowledge base, which additionally controls reiteration of the model building process with modified parameters, should a model building process fail.

This sort of coupling between model parameters and solution characteristics enables parameters to be modified in a significantly more controlled manner than is possible with existing methods.

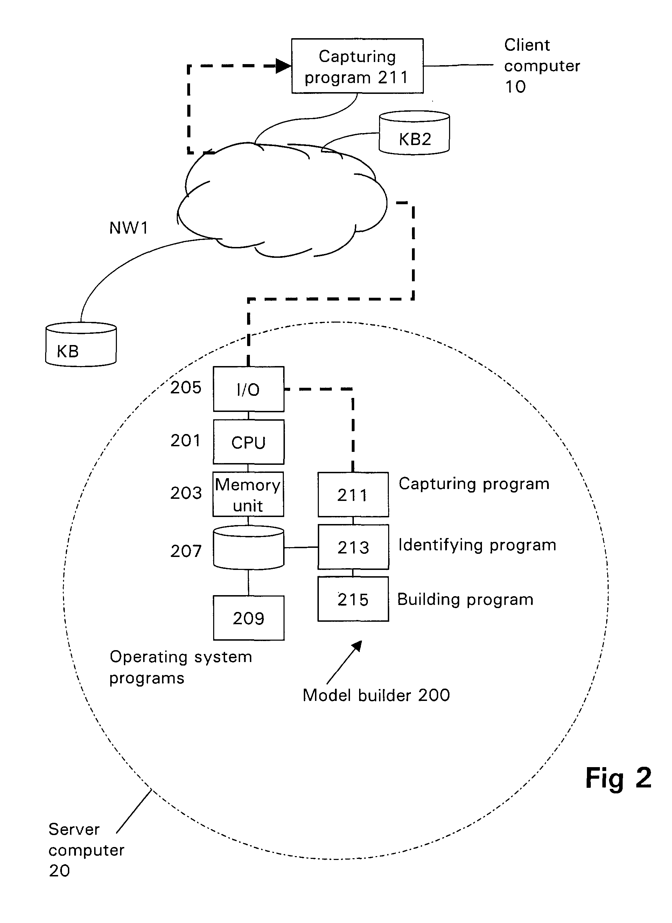

Referring to Figure 2, a first embodiment of the invention will now be discussed in more detail.

Figure 2 shows a server computer 20 comprising a central processing unit (CPU) 201; a memory unit 203; an input/output device 205 for connecting the server computer 20 to the client computer 10 via the network NW1; storage 207; and a suite of operating system programs 209, which control and coordinate low level operation of the server computer 20. Such a configuration is well known in the art.

Generally embodiments of the invention are referred to as a model builder 200, and comprise at least some of programs 211, 213, 215. These programs are stored on storage 207 and are processable by the CPU 201. The programs 211, 213, 215 can alternatively be stored on one or more computers (not shown) located remote from the server computer 20. In addition, the model builder 200 includes one or more knowledge bases KB, KB2 which store fuzzy information relating to a plurality of data analysis methods and models. The knowledge base(s) KB, KB2 may be located on, or remote from, the server computer 20.

Embodiments comprise at least the building program 215, which is operable to build a model, in accordance with fuzzy rules accessible from the second knowledge base KB2, as is described in more detail below. Optionally, embodiments may additionally include a program 211 for capturing data and user preferences to be used by the building program 215, and a program 213 for identifying a method to be used by the building program 215 on the basis of user preferences determined from the data captured by the capturing program 211.

In operation, data is input to the model builder 200, for example by a user specifying a data input file in response to a request for data. Such a request for data could be embodied in a computer program (such as the capturing program 211 described below) running on the client computer 10. In addition, the type of model to be built is input to the model builder 200. This may either be specified directly by the user, e.g. "a neural network", via the capturing program 211, or may be identified on the basis of user preferences, as is described below, with reference to the identifying program 213.

Once the type of model has been identified, the building program 215 builds the model, using standard and/ or purpose-built analysis tools, under the control of one or more fuzzy rules, as is described in more detail below. These fuzzy rules can themselves be adapted by the building program 215 in accordance with solutions to the model. Once a model has been built by the building program 215, it creates an application based on the model. Typically this application is a standalone program, and comprises program code required to execute the created model.

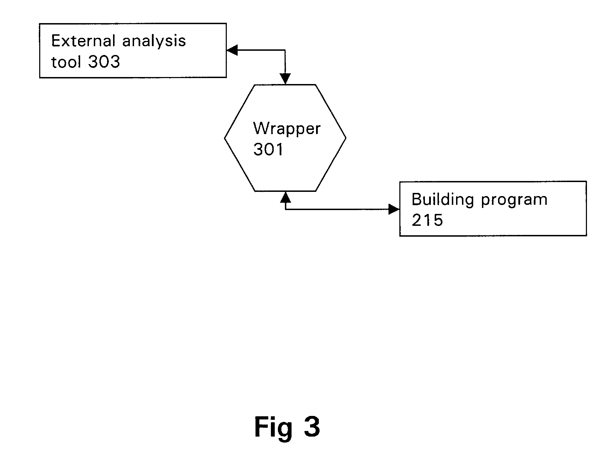

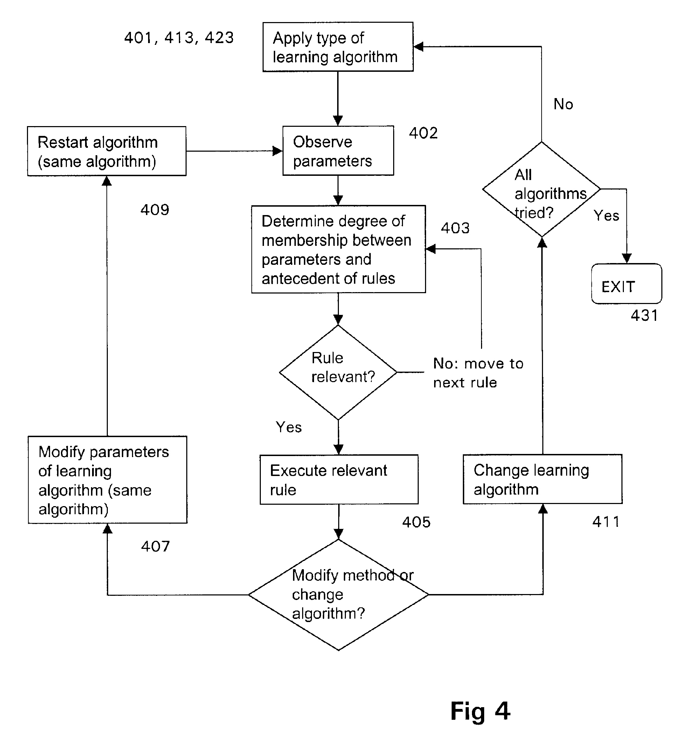

The functionality of the building program 215 will now be considered in more detail, in particular with reference to Figures 3 and 4.

The building program 215 interoperates with standard analysis tools via wrappers 301, as shown in Figure 3. As is known in the art, a wrapper 301 is a piece of software that interfaces between an external tool 303 and the building program 215; essentially each wrapper 301 is associated with an external tool and translates information between the building program 215 and its associated tool 303, so that the tool 303 can be executed in accordance with instructions from the building program 215. Alternatively, or additionally, the building program 215 interoperates with one or more bespoke models, in which case a wrapper 301 is not required.

As stated above, each tool can carry out a particular data analysis method. For example, in embodiments of the invention the following external tools are utilised:

TABLE 1

| METHOD | DETAILS |
|---|---|
| Decision trees | "DT Package", which is available under the Gnu Public License from the University of Magdeburg, author Christian Borgelt, described in "Attributauswahlmaße für die Induktion von Entscheidungsbäumen: Ein Überblick", Christian Borgelt und Rudolf Kruse.In: Gholamreza Nakhaeizadeh, ed. Data Mining: Theoretische Aspekte und Anwendungen, pp. 77-98. Physica-Verlag, Heidelberg, Germany 1998. The software is available (for downloading) from http://fuzzy.cs.Uni-Magdeburg.de/-borgelt/software.html |
| Neuro-fuzzy methods | • NEFCLASS: "Obtaining Interpretable Fuzzy Classification Rules from Medical Data", Detlef Nauck and Rudolf Kruse, Artificial Intelligence in Medicine, 16:149-169, 1999.<br>• NEFPROX: "Neuro-Fuzzy Systems for Function Approximation", Detlef Nauck and Rudolf Kruse, Fuzzy Sets and Systems, 101:261-271, 1999. |

TABLE 1   (continued)

| METHOD | DETAILS |
| --- | --- |
| Statistical Methods | • SPSS "SPSS 10.0 Guide to Data Analysis", Marija J. Norusis, Prentice Hall, 2000, ISBN: 0130292044;<br>• Statistica: "Statistica Software", Statsoft, International Thomson Publishers, 1997, ISBN: 0213097732 |

The instructions, which control execution of the tool, are stored in one of the knowledge bases KB2, and essentially comprise heuristics, in the form of exact and fuzzy rules. These heuristics define the learning process required for model creation, and are method-specific. For example, assuming the user had specified that he wanted a neural network to be built, (either directly, or the identifying program 213 had identified a neural network as being best suited to his preferences), then the rules relating to Method type NEURAL NETWORK (NN) would be accessed by the building program 215.

In this embodiment, the NN method accessible to the building program 215 is a previously created bespoke tool, which can utilise three possible learning algorithms: backpropagation (BackProp), quickpropagation (QuickProp) and resilient propagation (Rprop). The selection and processing of the learning algorithms involve the following steps (referring to Figure 4):

Apply Rprop first 401.
If Rprop fails apply QuickProp 413
If QuickProp fails apply BackProp 423
If BackProp fails, then abort 431 neural network generation

During execution of the learning algorithms, the building program 215 observes parameters such as oscillation, error, convergence speed, number of parameters etc. (as they are inherent features of the learning/analysis/model creation algorithms), and compares these against predetermined fuzzy learning rules [RRn], such as:

If the error reaches a *high* local minimum *early,* then repeat the current learning algorithm using *slighly more* hidden units.      **[RR1]**
If the error oscillates *strongly,* then reduce the learning rate *strongly*      **[RR2]**
If the error decreases, then increase the learning rate *slightly.*      **[RR3]**

As illustrated above, typically several algorithms are available for creating the same kind of model. In the present example, that of creating a neural network model, there are three such algorithms: Rprop, QuickProp and BackProp. Each algorithm yields a certain performance feature, so that for example, a first algorithm may have a faster convergence speed than a second algorithm, but it may be prone to oscillations. Thus if a faster learning rate were required, the first algorithm would be selected to build the model. If, however, oscillations occur, it may be necessary to switch to the slower algorithms to avoid oscillations. These algorithms may not only differ in computational complexity, speed of convergence, and ease of parameterisation, but also in the way they ensure certain features appear/evolve in the model they create from data.

Accordingly, during the model learning/creation process, the building program 215 observes 402 at least some of the parameters listed above. Then the building program 215 determines 403 a degree of membership of the parameters to the fuzzy learning sets in the antecedent of the fuzzy learning rules listed above, in order to determine whether the learning rule is relevant, and thus whether a learning rule should be executed. If a learning rule is relevant, the building program 215 executes 405 the said rule.

For example, considering the learning rules listed above, if the fuzzy learning set for error satisfies rule RR1 then the building program 215 changes 407 the number of parameters of the neural network to add more hidden units, and restarts 409 the algorithm. If any of the algorithms fail, the building program 215 changes 411 the algorithm - to apply one of the other learning algorithms.

Considering a second example, a Neuro-fuzzy method, where the first stage is rule learning, the second knowledge base KB2 contains fuzzy learning rules of the following format:

If simplicity is *high* and interpretability is *high,* and number of rules is *high,* then reduce the number of fuzzy sets per variable *slightly* and restart      **[RR4]**

Thus if the building program 215 observes, at step 403, a huge number of rules being created, (i.e. if rule [RR4] is satisfied), then the building program 215 changes 407 the number of fuzzy sets per variable of the neuro-fuzzy model, and restarts 409 the algorithm.

*Adaptability of fuzzy rules in the second knowledge base KB2 by building program 215*

As will be appreciated from the above description, data analysis and model creation are heavily dependent on the fuzzy learning sets in the learning rules: firstly, for a learning rule to be considered relevant (step 403), the antecedent fuzzy learning set has to overlap with the method parameters; secondly, the effect of the learning rule, or the degree to which an algorithm is modified (step 407), is dependent on the consequent fuzzy learning set.

Embodiments of the invention thus include means by which the building program 215 monitors the performance of these fuzzy learning rules, and can adapt the learning rules (e.g. by modifying the fuzzy learning sets defining the learning rules), based on the "success" rate thereof. This means could be a neuro-fuzzy algorithm. As is known in the art, neuro-fuzzy algorithms modify fuzzy rules by adapting antecedent and consequent fuzzy sets in accordance with observed data. A neuro-fuzzy algorithm such as the NEFPROX fuzzy rule-learning algorithm, referred to above, could be used.

Application of a neuro-fuzzy algorithm can be demonstrated using rule RR2 above as an example:

If the error oscillates *strongly,* then reduce the learning rate *slightly*     **[RR2]** In rule RR2, oscillate *strongly* and reduce *slightly* are represented by fuzzy learning sets. A predefined goal of this rule could be to reduce the oscillation to zero after n steps (say n = 10). Assuming the error satisfies the antecedent of this rule, rule RR2 is applied (step 407) and the learning algorithm is continued with a smaller learning rate (step 409).

If, after 10 such cycles of the learning algorithm, the oscillation is not zero, the building program 215 concludes that the consequent part of the rule is too weak, and sets the oscillation value to be an error value.

The building program 215 then modifies, using a neuro-fuzzy learning algorithm and the error value, the consequent part of this fuzzy learning rule (the fuzzy learning set *"slightly"*) so that next time the rule is applied, the degree of reduction applied to the learning rate is greater. In the same way the antecedent part (the fuzzy learning set *strongly)* can be modified such that the fuzzy learning rule produces a larger degree of fulfilment in future similar situations. For each rule RRn, the parameters - in this case the oscillation - that can be interpreted as error values are identified to the building program 215. These error values are then utilised to modify fuzzy learning rules as described above.

Once a model has been built by the building program 215, it creates an application based on the model. This application is a standalone program, and comprises program code required to execute the created model. The application can access the same kind of data source that the user has submitted for analysis, e.g. data in a database, a text file or an Excel spread sheet. The user can then use that application to process new data and perform predictions, classifications etc. The application typically has a simple user interface that asks the user for a data source and displays the results of the model application, e.g. in form of table, where the result for each record is shown. It also creates an output file that contains the results.

Capturing program 211

The capturing program 211 manages an interactive dialogue session with the user at the client computer 10, in order to capture user requirements.

The capturing program 211 could be a Java applet running inside a browser, or a plain Hyper-Text Markup Language (HTML) form downloaded from a server computer (not necessarily the server computer 20) to the client computer 10. As an alternative to running an application within, or in operative association with, a web browser, the capturing program 211 could comprise a stand-alone program that either uses a communication protocol or uses Remote Method Invocation (where the client executes methods inside the server by calls over the network) to exchange information with a corresponding program (not shown) running on the server computer 20. In the latter case the capturing program 211 would include conventional text fields, lists, radio buttons etc. that are designed to enable a user to input requisite data, and would send data input by the user to the server upon completion of the said data input.

User requirements include type of data analysis method and user preferences. A user preference is an instance of a user characteristic; an example of a user characteristic is *simplicity,* and an instance of the user characteristic, or a user preference, is *high* level of *simplicity.* User preferences, such as *high,* can also be represented using fuzzy sets, as is described below.

The capturing program 211 could take many forms, as would be appreciated by one skilled in the art. The following passage shows one example of processes invoked by the capturing program 211 in an attempt to capture user requirements. The example relates to test result from cancer patients, where, for each patient there are nine results (i.e. cancer attributes, such as clump thickness, uniformity of cell size, uniformity of cell shape etc.) each having possible integer values between 1 and 10, and each case has been pre-classified as being benign or malignant. It is to be understood that the capturing program 211 is not limited to the processes described in this specific example.

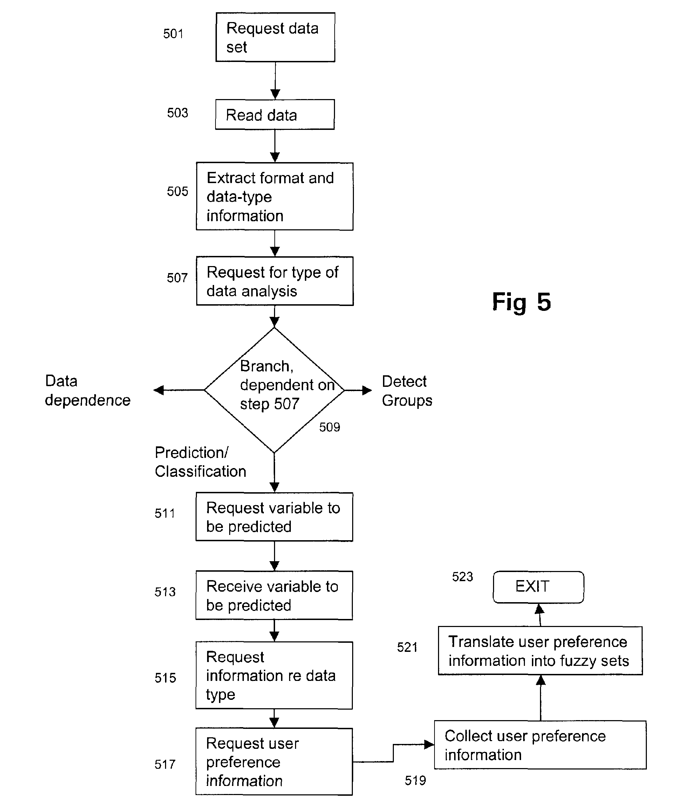

For the purposes of this example it is assumed that the capturing program 211 is an applet that has, for example, been downloaded from the server computer 20, as shown schematically in Figure 2. Referring to Figure 5,

**EP 1 298 505 A1**

the capturing program 211 firstly requests 501 the user to input a data set, whereupon the user duly submits the data. This may be in the form of a data file (e.g. database file, Excel spreadsheet, text file) or a graphical representation (e. g. an image such as an x-ray image).

The capturing program 211 reads 503 in the data, and applies 505 standard techniques to extract format and data type information from the data, in order to identify variables present in the data. If the data is input in the form of a data file, these techniques include searching for white spaces, commas, semi-colons etc. so as to identify a number of variables within the data set (here 10), identifying data types (i.e. integer, real, string) for each of the variables, and identifying any missing values within the data set. An example of identifying data types includes reading a value as a string and trying to transform it into a specific data type. Typically the most specific data type is tried first, followed by the more general ones. A typical sequence is: date/time, boolean, integer, double. If all of the transformations fail, the value is considered to be a string.

Having completed an initial analysis of the data set (step 505), the capturing program 211 asks 507 the user to select a type of data analysis for the data set - e.g. the capturing program 211 presents the user with the following options:

*A) Predict the value of one or several variables from the remaining other variables (prediction, approximation, classification)*
*B) Detect groups within the data (cluster analysis)*
*C) Describe dependencies within the data (association rules, probabilistic models)*

Depending on the selection by the user, the capturing program 211 branches 509 into one of three processes. Assuming (for the purposes of this example) the user selects option (A), the capturing program 211 then asks 511 the user to select, from one of the variables identified at step 505, a variable to be predicted. Assuming the user selects variable 10 (diagnosis, say) the capturing program 211 receives 513 this selected variable, and then queries 515 the user regarding the nature of the variables identified at step 505.

For example, the capturing program 211 may submit the following question, and options, to the user at step 515:

*There are nine input variables. All of them display only integer values. Do you know if the values represent actually symbols or real numbers, i.e. would decimal fractions theoretically be possible?*

*A) The values represent symbols*
*B) The values represent genuine numbers*
*C) I don't know*

This statement is generated dynamically by the capturing program 211, using information captured at step 505: in general the capturing program 211 may have access to a selection of templates, in which the captured information (*nine, integer*) is inserted. Selection of template is dependent on branching (step 509), and type of data identified at step 505.

Assuming the user selects option (B) the capturing program 211 then asks 517 the user to select (or specify) instances of user characteristics, by, for example, presenting the user with a matrix of user characteristics, and allowing the user to select an instance thereof. An example of such a matrix, as completed by a user, is shown in Table 2:

TABLE 2

| USER CHARACTERISTICS | Instance of user characteristic | | |
|---|---|---|---|
| | *High* | *Low* | *Medium* |
| user friendliness | × | | |
| interpretability | × | | |
| simplicity | × | | |
| accuracy | | | × |
| speed | | × | |
| maintainability | | × | |
| robustness | × | | |

Once user preference information has been collected 519, the capturing program 211 may translate 521 the user preference information into fuzzy sets. For example, *high* is a fuzzy set, which is represented by a membership function over an artificial scale of 0 to 100. Example membership functions for *high* could start at 50 with membership degree 0.0, reach membership degree 1.0 at 75 and remain at 1.0 until it reaches 100. In other words, the membership function for *high* can be described by three characteristic points, which are connected by straight lines: (50, 0.0); (75, 1.0); (100, 1.0). The fuzzy set *medium* is represented as (25, 0.0), (50, 1.0), (75, 0.0); and the fuzzy set *low* is represented as (0, 0.0), (25, 1.0), (50, 0.0). It will be understood by one skilled in the art that a fuzzy set could be specified in many alternative formats, for example by two, or four characteristic points, or by a parameterised function.

The capturing program 211 then exits 523.

In general, therefore, the capturing program 211 collects at least some of the following information: type of data analysis (in this example prediction); type of data to be analysed (in this example integer); and user preferences in terms of type of data analysis. Other information, such as identification of variable to be predicted is dependent on user selection (steps 509, 511), and will vary from example to example.

Identifying program 213

The identifying program 213 receives, as input, information describing the type of data analysis required by the user (e.g. predictive, classification, clustering etc.), together with the user's preferences (e.g. *very simple, highly accurate* etc., which has already been, or can be, translated e.g. into fuzzy logic sets). This input is typically received from the capturing program 211.

The identifying program 213 is operable to identify, by application of predetermined fuzzy rules, or equivalent, analysis methods (also referred to as models) having characteristics that meet the user's preferences. These rules are stored in the knowledge base KB, and map user characteristic to model characteristic as shown in the following examples:

*Rule format:*

    **IF** [instance of user characteristic] **then** [instance of model characteristic] e.g. RULE TYPE: SIMPLICITY
    **If** *simplicity* is *high* **then** *number of parameters* is *low*
    **If** *simplicity* is *high* **then** *skill required* is *low*

These rules are based on the relationships shown in Table 3, which shows a mapping between model characteristics and user characteristics. For example, referring to Table 3, there will be rules relating user friendliness, interpretability, simplicity, accuracy and speed to number of parameters.

TABLE 3:

| Mapping between model characteristics and user characteristics | |
|---|---|
| **MODEL CHARACTERISTICS** | **USER CHARACTERISTICS** |
| Number of parameters | user friendliness, interpretability, simplicity, accuracy, speed |
| Skill required | simplicity, maintainability |
| Level of user interaction | user friendliness, interpretability |
| Adaptability | accuracy, speed, robustness, maintainability |
| Customisability | interpretability, maintainability |
| Modelling capability | Robustness |
| Data required | Speed |
| Prior knowledge required | Interpretability |

Essentially these rules are used to translate user preferences, which, as described above, are themselves represented as fuzzy sets, into fuzzy sets for the model characteristics. The identifying program 213 then compares the said model characteristic fuzzy sets with fuzzy sets representative of actual data analysis methods (shown in Table 4), so as to identify one or more data analysis methods that satisfy the user preferences.

TABLE 4:

| Mapping between model characteristics and methods | | | | | | |
|---|---|---|---|---|---|---|
| **MODEL CHARAC'TIX** | **DATA ANALYSIS METHODS** | | | | | |
| | **Neural Network** | | **Linear Regression** | | **Neuro-fuzzy** | |
| | Natural Language | Fuzzy set | Natural Language | Fuzzy set | Natural Language | Fuzzy set |
| Number of parameters | *high* | (50, 0.0); (75, 1.0); (100, 1.0) | *low* | (0, 1.0); (25, 1.0); (50, 0.0) | *medium* | (25, 0.0); (50, 1.0); (75, 0.0) |
| Skill required | expert | (50, 0.0); (75, 1.0); (100, 1.0) | novice | (0, 1.0); (25, 1.0); (50, 0.0) | casual | (25, 0.0); (50, 1.0); (75, 0.0) |
| Level of user interaction | *moderate* | (25, 0.0); (50, 1.0); (75, 0.0) | *low* | (0, 1.0); (25, 1.0); (50, 0.0) | *moderate* | (25, 0.0); (50, 1.0); (75, 0.0) |
| Adaptability | *moderate* | (25, 0.0); (50, 1.0); (75, 0.0) | *low* | (0, 0.0); (25, 1.0); (50, 1.0) | *high* | (50, 0.0); (75, 1.0); (100, 1.0) |
| Customisability | difficult | (0, 1.0) (100, 0.0) | *none possible* | (0, 1.0) | easy | (0, 0.0) (100, 1.0) |
| Modelling capability | universal | (0, 0.0) (100, 1.0) | restricted | (0, 1.0) (100, 0.0) | universal | (0, 0.0) (100, 1.0) |
| Data required | lots | (0, 0.0) (100, 1.0) | little | (0, 1.0) (100, 0.0) | lots | (0, 0.0) (100, 1.0) |
| Prior knowledge required | prior knowledge impossible | (0, 1.0) (100, 0.0) | prior knowledge impossible | (0, 1.0) (100, 0.0) | prior knowledge possible | (0, 0.0) (100, 1.0) |

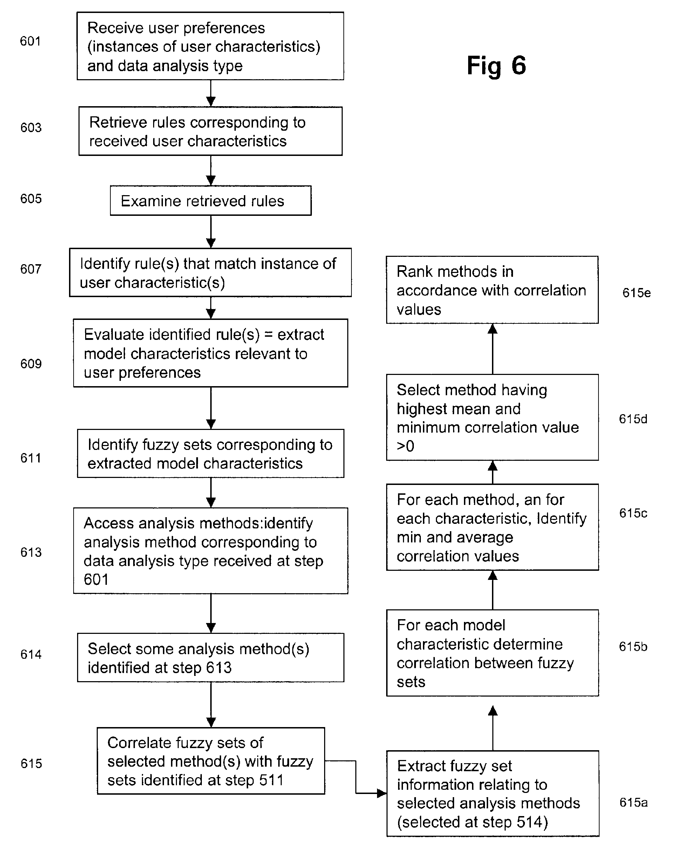

The functionality of the identifying program 213 is best described by means of an example. Referring to Figure 6, the identifying program 213 receives 601 user preferences and data analysis type via the capturing program 211. The identifying program 213 then retrieves 603 rules corresponding to user characteristic(s) for which there is a user preference. For the purposes of the present example it is assumed that the user has input a single user preference, of *high simplicity,* and a predictive data analysis type, so that the identifying program 213 retrieves rules corresponding to the user characteristic *simplicity* at step 603.

The identifying program 213 then examines 605 the simplicity-type rules, and, by examination of the antecedent part of the rules, identifies 607 one or more rules that match the level of simplicity specified by the user *(high)* to a degree larger than zero.

Having identified, at step 607, one or more rules corresponding to the user preference, the identifying program 213 evaluates 609 the identified rules. This identifies an instance of, or fuzzy sets corresponding to, one or more model characteristics. In this example there are two rules, and two model characteristics. The first model characteristic is number of parameters, for which the instance of the model characteristic is *low* (i.e. has a membership function that can be described by three characteristic points, which are connected by straight lines: (0, 0.0); (25, 1.0); (50, 0.0)). The second model characteristic is skill required, for which the instance is *novice* (i.e. has a membership function that can be described by three characteristic points, which are connected by straight lines: (0, 1.0); (25, 1.0); (50, 0.0)).

The identifying program 213 thus identifies 611 as many fuzzy membership sets as number of model characteristics extracted at step 609 (which in this case is 2).

The identifying program 213 then accesses 613 entries corresponding to at least some analysis methods (e. g. by referring to a look-up table such as Table 5) and identifies 614 methods corresponding to the type of data analysis specified as input from the capturing program 211 at step 601. The knowledge base KB may store this information in the following form:

TABLE 5

| TYPE OF DATA ANALYSIS | Data analysis method |
|---|---|
| Prediction | Neural Network (feedforward), Neuro-Fuzzy, Decision Tree, Linear Regression, Non-linear Regression, Discriminant Analysis, K-Nearest Neighbour, Naive Bayes Classifier, Bayesian Network |
| Clustering | Neural Network (Self-Organising Feature Map), Fuzzy Cluster Analysis, K-Means Clustering |
| Description of Dependencies | Association Rules, Bayesian Network |

Thus if the identifying program 213 receives, at step 601, "prediction" as a type of data analysis, then the identifying program 213 selects 614 all of the methods corresponding to "Prediction".

From the methods selected at step 614, the identifying program 213 then identifies 615 those that have fuzzy membership corresponding to the fuzzy sets identified at step 611 (e.g. by referring to a look-up table such as Table 4). In some embodiments, particularly when there are multiple user preferences, this step 615 involves correlating fuzzy sets of the methods accessed at step 613 with fuzzy sets identified at step 611. (This is described below.)

In the present embodiment, simple pattern matching techniques (including, e.g. inspection) are used to identify those methods that have fuzzy membership corresponding to the fuzzy sets identified at step 611. Referring back to Table 4, it can be seen that the linear regression method and NF methods have *low number of parameters* and require only novice or casual skills, meaning that both of these methods would suit a user input of "simple model".

In most cases, there will be multiple rules relating user characteristics to model characteristics, and the identifying program 213 will receive user preference information relating to multiple user characteristics. Other embodiments of the invention thus may involve more stages than those described above. For example, assume the user preferences comprise the following:

user friendliness = *high*; interpretability = *high;* simplicity = *high*; accuracy = *medium;* speed = *low;* maintainability = *low;* robustness = *high,*

and assume that the knowledge base KB stores, or has access to, the following rules:

**If** *simplicity* is *high* **then** *number of parameters* is *low*        [R1]
**If** *accuracy* is *low* and *interpretability* is *high* **then** *prior knowledge* is possible and *model capability* is universal [R2]
**If** *maintainability* is *low* **then** *adaptability* is *low* and *no customisation*        [R3]

In this example, the identifying program 213 identifies rules R1 and R3 as being relevant to the user preferences at step 607. Rules R1 and R3 provide a complete match with the user preferences. Rule R2 does not match, because the membership functions *high* and *low* for accuracy do not overlap.

Then at step 609 the identifying program 213 evaluates 609 the rules R1 and R3, thereby computing the conclusions of the rules R1, R3. In the present example the conclusions are identical to the consequent part (the "then" part), and model characteristics *number of parameters, adaptability, customisation* are extracted.

Step 611, which identifies degrees of membership of the model characteristics, thus identifies the following three fuzzy sets:

number of parameters = *low*
adaptability = *low*
customisation = *none*

For the identifying program 213 to correlate 615 these fuzzy sets with data analysis methods selected at step 614, the identifying program 213 firstly extracts 615a fuzzy set information relating to these selected data analysis methods. Referring to table 4, the identifying program 213 thus extracts 615a the following information:

TABLE 6

| | Neural Network | Linear Regression | Decision Tree | Neuro-fuzzy |
|---|---|---|---|---|
| FUZZY SETS TO BE MATCHED | | | | |
| number of parameters = *low* (0, 1.0); (25, 1.0); (50, 0.0) | *high* (50, 0.0); (75, 1.0); (100, 1.0) | *low* (0, 0.0); (25, 1.0); (50, 1.0) | *medium* (25, 0.0); (50, 1.0); (75, 1.0) | *medium* (25, 0.0); (50, 1.0); (75, 1.0) |
| Adaptability = *low* (0, 1.0); (25, 1.0); (50, 0.0) | *moderate* (25, 0.0); (50, 1.0); (75, 1.0) | *low* (0, 0.0); (25, 1.0); (50, 1.0) | *low* (0, 0.0); (25, 1.0); (50, 1.0) | *high* (50, 0.0); (75, 1.0); (100, 1.0) |
| Customisation = *none* (0.0, 0.0) | *difficult* (0, 1.0) (100, 0.0) | *none* possible (0, 1.0) | *difficult* (0, 1.0) (100, 0.0) | *easy* (0, 0.0) (100, 1.0) |

The identifying program 213 then determines 615b the correlation between the characteristics to be matched and the fuzzy sets corresponding to each of the method types. An equation such as m = sup(min(a(x), b(x))), where m is the degree of match, sup identifies a maximum value over a continuum such as a real interval, and a and b are fuzzy sets, could be used to calculate the correlation between the model characteristics. The equation retrieves the highest membership value from the intersection of two fuzzy sets and must be evaluated for all values of the underlying scale (in this case between 0 and 100 in all cases). If the fuzzy sets are identical m = 1.0; if the fuzzy sets do not overlap at all m = 0.0.

TABLE 7

| | Correlation between fuzzy sets | | | |
|---|---|---|---|---|
| | Neural Network | Linear Regression | Decision Tree | Neuro-fuzzy |
| Model characteristics to be matched | | | | |
| number of parameters | 0.0 | 1.0 | 0.5 | 0.5 |
| adaptability | 0.5 | 1.0 | 1.0 | 0.0 |
| customisation 1.0 1.0 1.0 0.0 | 1.0 | 1.0 | 1.0 | 0.0 |

Next the identifying program 213 identifies 615c minimum and average correlation values for each of the methods:

TABLE 8

| | Neural Network | Linear Regression | Decision Tree | Neuro-fuzzy |
|---|---|---|---|---|
| Min correlation | 0.0 | 1.0 | 0.5 | 0.0 |
| Mean correlation | 0.75 | 1.0 | 0.83 | 0.16 |

and selects 615d whichever method has both the highest mean, and a minimum correlation greater than 0. In the present example the method linear regression would be selected because it has the highest mean and the minimum correlation value is greater than 0 (in fact both values are 1.0, indicating that this method matches user requirements exactly). In addition, the identifying program 213 can rank 615e the methods in accordance with the mean and minimum correlation values. This ranking indicates how well the methods are estimated to match the user requirements.

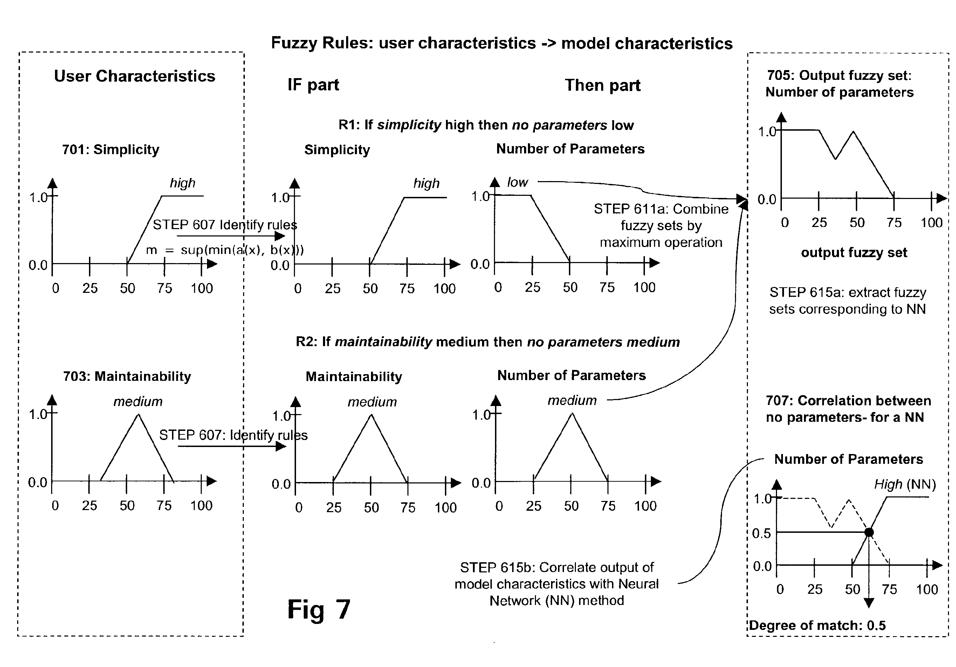

In the above example, each of the three model characteristics extracted at step 609 occurs once only. However, there may be situations where more than one rule identified at step 607 involves the same model characteristic. For example, referring to Figure 7, if the user's preferences received at step 601 were for a simple model 701 (i.e. simplicity = *high*), where maintainability thereof is *medium* 703, then rules identified at step 607 may include

**If** *simplicity* is *high* **then** *number of parameters* is *low*      **[R1]**
**If** *maintainability* is *medium* **then** *number of parameters* is *medium*      **[R2]**

Thus step 611, which involves identifying fuzzy sets for the model characteristics, based on the consequent parts of rules R1 and R2, additionally involves combining 611a (step not shown) *low* and *medium* to identify a fuzzy set for *number of parameters.*

An example of how these two model instances, *low* and *medium,* may be combined is shown in Figure 7. In this example, the equation c(x) = max(a(x), b(x)), is applied (where a(x) and b(x) are *low* and *medium* fuzzy sets respectively and c(x) represent the combined fuzzy set). This produces an output fuzzy set 505 for *number of parameters.*

Steps 615a, 615b and 615c proceed as described above. For a neural network method, and it can be seen that correlation 507 between user requirements and the method Neural Network for the model characteristic *number of parameters* is 0.5.

When the building program 215 receives input from the identifying means, the building program 215 can be arranged to evaluate, during construction of a model, at least some of the model characteristics, and to compare them with fuzzy set(s) generated at step 611.

For example, consider a neuro-fuzzy method under construction. The building program 215 is adapted to evaluate, using one or more predetermined rules, a *number of parameters* for the said model under construction, and to compare the evaluated number with the fuzzy set for *number of parameters* evaluated at step 611. Typically, these predetermined rules would be stored in the second knowledge base KB2, and could have the following form:

$$\text{Number of parameters} = \frac{\text{number of rules in the neuro - fuzzy model under construction}}{\text{Max no rules}}$$

$$\text{Max number of rules} = (\text{Number of fuzzy sets})^{\text{No variables}}$$

e.g. if number of variables = 3, and there are 5 fuzzy sets/variable, then max number of rules = $5^3$ = 125;
if the number of rules characterising the neuro-fuzzy method under construction = 32, then
Number of parameters = 32/125 = 25.6.
This is a non-dimensional number, which maps directly onto the fuzzy set scale [0...100], and thus enables comparison of the actual number of parameters for this method under construction (or to be constructed/having been constructed) with the fuzzy set evaluated at step 611.

*Additional Implementation details*

Preferably the model builder 200 is written in the Java programming language, but this is not essential to the invention.

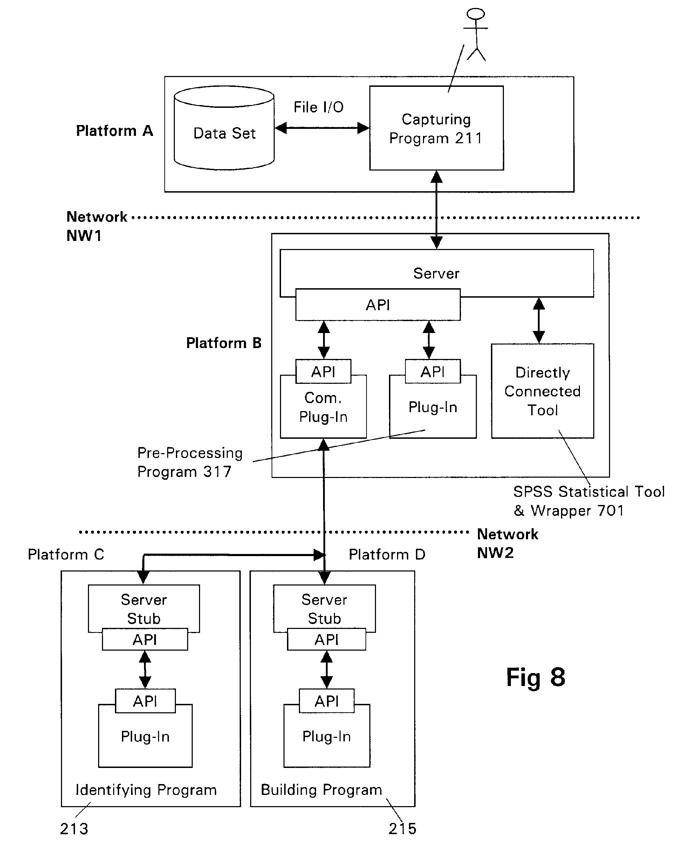

As an alternative to the arrangement shown in Figure 2, the programs 211, 213, 215 can be distributed over any number of computers. The server 20 has a plug-in application program interface (API), meaning that functions (programs 211, 213, 215 knowledge bases KB, KB2, external and bespoke data analysis methods 303 etc) can be provided in modules (plug-ins) that are then plugged into the server via the plug-in API, as shown in Figure 8.

As described above, the capturing program 511 will typically be an applet, which engages in a simplified user dialogue and hides the complexity of the data analysis process from the user. As an alternative, the capturing program 511 could be an expert interface, in the form of a visual programming tool, which provides the user with complete control over the analysis process. An expert user interface enables the user to specify data analysis methods and processes by creating, configuring and connecting blocks that represent certain functions.

As a further alternative, the capturing program 511 could be a machine interface that accepts text commands and can be used by agents and software robots (software tools that would use the model builder 200 to carry out dedicated data analysis on a regular basis without user intervention).

**Claims**

1. A method of creating a model from data, the model comprising one or more model parameters, the method comprising the steps of:

    (i) receiving data for use in creating the model;

(ii) inputting the data to a learning process associated with the model;

(iii) invoking the learning process, thereby modifying at least one of the model parameters;

(iv) accessing a control rule, the control rule comprising at least one fuzzy set relating to one or more model parameters;

(v) monitoring at least one of the model parameters;

(vi) comparing the or each monitored model parameter with the control rule to identify whether the rule should be applied, and if so, evaluating the rule; and

(vii) modifying the learning process in accordance with the evaluated rule.

2.  A method according to claim 1, in which step (vii) includes modifying one or more of the model parameters and restarting the learning process.

3.  A method according to claim 1, in which step (vii) includes selecting a new learning process.

4.  A method according to any one of the preceding claims, further including the steps of

(i) monitoring the effect of the modification on the learning process;

(ii) comparing the monitored effect with a predetermined criterion; and

(iii) if the monitored effect does not satisfy the predetermined criterion, modifying the corresponding control rule.

5.  A method according to claim 4, in which the step of modifying a control rule comprises the steps of

(i) quantifying the effect of the modification on the learning process as an error value; and

(ii) using the error value to modify at least one fuzzy set involved in the control rule such that the monitored modification of the learning process is observed to satisfy the predetermined criterion.

Server computer 20

NW1

### 1201 Processes

Receiving means 1203

Means for performing selected analysis method 1205

Means for summarising info 1207

Means for sending summarised info to client 1209

### 101 Interface:

Data analysis selecting means 103

Specifying means 105

Presenting means 107

Client computer 10

**Fig 1**

Capturing program 211

Client computer 10

KB2

NW1

KB

205   I/O

201   CPU

203   Memory unit

207

209

Operating system programs

211   Capturing program

213   Identifying program

215   Building program

Model builder 200

Server computer 20

**Fig 2**

External analysis tool 303

Wrapper 301

Building program 215

# Fig 3

401, 413, 423

Apply type of
learning algorithm

No

Restart algorithm
(same algorithm)

402

Observe
parameters

409

All
algorithms
tried?

Yes

Determine degree of
membership between
parameters and
antecedent of rules

403

EXIT

431

Rule
relevant?

No: move to
next rule

Yes

Modify parameters
of learning
algorithm (same
algorithm)

Execute relevant
rule

Change learning
algorithm

407

405

411

Modify method or
change
algorithm?

**Fig 4**

501 · Request data set

503 · Read data

505 · Extract format and data-type information

507 · Request for type of data analysis

Data dependence ← Branch, dependent on step 507 → Detect Groups

509

**Fig 5**

Prediction/ Classification

511 · Request variable to be predicted

513 · Receive variable to be predicted

515 · Request information re data type

517 · Request user preference information

519 → Collect user preference information

521 · Translate user preference information into fuzzy sets

523 · EXIT

**Fig 6**

601 — Receive user preferences (instances of user characteristics) and data analysis type

603 — Retrieve rules corresponding to received user characteristics

605 — Examine retrieved rules

607 — Identify rule(s) that match instance of user characteristic(s)

609 — Evaluate identified rule(s) = extract model characteristics relevant to user preferences

611 — Identify fuzzy sets corresponding to extracted model characteristics

613 — Access analysis methods:identify analysis method corresponding to data analysis type received at step 601

614 — Select some analysis method(s) identified at step 613

615 — Correlate fuzzy sets of selected method(s) with fuzzy sets identified at step 511

615e — Rank methods in accordance with correlation values

615d — Select method having highest mean and minimum correlation value >0

615c — For each method, an for each characteristic, Identify min and average correlation values

615b — For each model characteristic determine correlation between fuzzy sets

615a — Extract fuzzy set information relating to selected analysis methods (selected at step 514)

# Fuzzy Rules: user characteristics -> model characteristics

## User Characteristics

**IF part**

**Then part**

EP 1 298 505 A1

**701: Simplicity**

**R1: If** *simplicity* **high then** *no parameters* **low**

Simplicity

Number of Parameters

STEP 607 Identify rules

$m = \sup(\min(a(x), b(x)))$

STEP 611a: Combine fuzzy sets by maximum operation

**705: Output fuzzy set: Number of parameters**

output fuzzy set

STEP 615a: extract fuzzy sets corresponding to NN

**R2: If** *maintainability* **medium then** *no parameters medium*

**703: Maintainability**

Maintainability

Number of Parameters

STEP 607: Identify rules

**707: Correlation between no parameters- for a NN**

Number of Parameters

STEP 615b: Correlate output of model characteristics with Neural Network (NN) method

Degree of match: 0.5

# Fig 7

**Platform A**

Data Set

File I/O

Capturing
Program 211

**Network
NW1**

Server

API

**Platform B**

API

Com.
Plug-In

API

Plug-In

Directly
Connected
Tool

Pre-Processing
Program 317

SPSS Statistical Tool
& Wrapper 701

Platform C

Platform D

**Network
NW2**

Server
Stub

API

API

Plug-In

Identifying Program

213

Server
Stub

API

API

Plug-In

Building Program

215

**Fig 8**

**European Patent Office**

## EUROPEAN SEARCH REPORT

Application Number

EP 01 30 8261

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 95 02855 A (SIEMENS AG ;LINZENKIRCHNER EDMUND (DE)) 26 January 1995 (1995-01-26) * page 1, line 1 - page 6, line 5; figures 1-6 * | 1-5 | G05B17/02 G06N3/04 |
| A | DE 199 14 277 A (SCHUETZ KLAUS ;ARBEITSFOERDERUNGSGESELLSCHAFT (DE)) 12 October 2000 (2000-10-12) * the whole document * | 1-5 | |
| A | US 5 524 176 A (NARITA ET AL) 4 June 1996 (1996-06-04) * column 1, line 10 - column 16, line 67 * | 1-5 | |
| A | WO 96 14608 A (PREUSS HANS PETER ;SIEMENS AG (DE)) 17 May 1996 (1996-05-17) * page 1, line 5 - page 3, line 24 * | 1-5 | |
| A | DE 195 37 010 A (SIEMENS AG) 10 April 1997 (1997-04-10) * page 2, line 3 - line 50 * | 1-5 | TECHNICAL FIELDS SEARCHED (Int.Cl.7) G05B G06N |

The present search report has been drawn up for all claims

| Place of search | Date of completion of the search | Examiner |
|---|---|---|
| THE HAGUE | 21 May 2002 | Schenkels, P |

**ANNEX TO THE EUROPEAN SEARCH REPORT
ON EUROPEAN PATENT APPLICATION NO.**   EP 01 30 8261

This annex lists the patent family members relating to the patent documents cited in the above–mentioned European search report.
The members are as contained in the European Patent Office EDP file on
The European Patent Office is in no way liable for these particulars which are merely given for the purpose of information.

21–05–2002

| Patent document cited in search report | | Publication date | Patent family member(s) | | Publication date |
|---|---|---|---|---|---|
| WO 9502855 | A | 26–01–1995 | DE | 4323439 A1 | 19–01–1995 |
| | | | AT | 150557 T | 15–04–1997 |
| | | | WO | 9502855 A1 | 26–01–1995 |
| | | | DE | 59402167 D1 | 24–04–1997 |
| | | | EP | 0708936 A1 | 01–05–1996 |
| | | | JP | 8507631 T | 13–08–1996 |
| | | | US | 5809487 A | 15–09–1998 |
| DE 19914277 | A | 12–10–2000 | DE | 19914277 A1 | 12–10–2000 |
| US 5524176 | A | 04–06–1996 | NONE | | |
| WO 9614608 | A | 17–05–1996 | DE | 4439505 A1 | 09–05–1996 |
| | | | AT | 175501 T | 15–01–1999 |
| | | | WO | 9614608 A1 | 17–05–1996 |
| | | | DE | 59504759 D1 | 18–02–1999 |
| | | | EP | 0791192 A1 | 27–08–1997 |
| | | | ES | 2128087 T3 | 01–05–1999 |
| | | | HU | 78062 A2 | 28–07–1999 |
| | | | JP | 10508402 T | 18–08–1998 |
| DE 19537010 | A | 10–04–1997 | DE | 19537010 A1 | 10–04–1997 |
| | | | JP | 9134207 A | 20–05–1997 |

EPO FORM P0459

For more details about this annex : see Official Journal of the European Patent Office, No. 12/82